# EUROPEAN PATENT APPLICATION

(11) **EP 2 998 918 A1**
(43) Date of publication of application: **23.03.2016**
(21) Application number: 14798194.8
(22) Date of filing: 24.04.2014
(51) Int. Cl.: G06Q 30/02, G06Q 50/30

(54) **MOBILE BODY INFORMATION PROVISION SYSTEM, MOBILE BODY INFORMATION PROVISION METHOD, AND MOBILE BODY INTERIOR TERMINAL INFORMATION PROVISION METHOD**

(30) Priority: 13.05.2013 JP 2013100947
(71) Applicant: Panasonic Intellectual Property Management Co., Ltd., Osaka-shi, Osaka 540-6207 (JP)
(72) Inventor: YAMAMURA, Toshiki, Osaka-shi, Osaka 540-6207 (JP)
(74) Representative: Vigand, Philippe
(86) International application number: PCT/JP2014/002313
(87) International publication number: WO 2014/185018

(57) **Abstract**

Fixed ground system (2) acquires advertising contents from an advertiser, and acquires operation information (9) for the moving body and attribute information (10) of a passenger using the moving body, from a business operator of moving body, and consequently selects advertising content (7) for the moving body. Moving body system (3) selects advertising content for a moving body terminal based on the advertising contents (12) acquired from fixed ground system (2) and seat information (14). According to this configuration, it is possible to provide a system which provides information corresponding to attributes of a passenger and histories of the passenger, to the passenger in the moving body which has a departure place and a destination place, even in a case where an arrival destination is the same passengers, when a seat of the passenger is different from a reserved seat such as the seat of an airplane.

## Description

### TECHNICAL FIELD

The present disclosure relates to an information providing system for moving body, an information providing method for moving body and an information providing method for moving body terminal, which provide information to passengers of a moving body which has a departure place and a destination place.

### BACKGROUND ART

PTL 1 relates to an information display system which displays information in a moving body such as a vehicle and particularly relates to an information display system which displays information corresponding to an arrival destination for a passenger, on a display apparatus disposed at a seat. Further, PTL 1 discloses providing service information for the arrival destination using reservation information of a seat.

However, PTL 1 discloses displaying information corresponding to the arrival destination for the passenger, and therefore has a matter that only the same information is displayed to passengers of the same arrival destination. Further, information corresponding to the arrival destination is displayed based on a seat reservation database. When a seat of the passenger is different from a reserved seat by the passenger's request or adjustment of a weight balance of the moving body, the information is not applicable.

The present disclosure provides a system which provides appropriate information for each passenger, even in a case where an arrival destination is the same for passengers, when a seat of the passenger is different from a reserved seat such as the seat of an airplane.

### Citation List

### Patent Literature

PTL 1: Japanese Patent No. 4860281

### SUMMARY OF THE INVENTION

An information providing system for moving body according to the present disclosure includes a fixed ground system and a moving body system which is installed in a moving body. In the information providing system for moving body in which the fixed ground system and the moving body system are connected through a network, the fixed ground system includes a service information acquisition unit which receives a plurality of service information from at least one service provider, a result information providing unit which provides the service provider with results of a service provided the moving body system, a moving body information acquisition unit which acquires route information of the moving body, attribute information of a passenger using the moving body and seat information of the moving body, from a business operator of moving body, an information providing unit which selects a service from the service information, based on the route information and the attribute information, and provides the selected service and the seat information to the moving body system, and a service result information acquisition unit which acquires results of the service provided the moving body system, from the moving body system. The moving body system includes an information acquisition unit which acquires the selected service and the seat information, output from the information providing unit of the fixed ground system, a service information providing unit which provides the selected service for a moving body terminal disposed at a seat corresponding to the seat information, and a service result information providing unit which provides the fixed ground system with results of the selected service.

The information providing system for moving body according to the present disclosure can provide a system which provides appropriate information for each passenger, even in a case where an arrival destination is the same for passengers, when a seat of the passenger is different from a reserved seat such as the seat of an airplane.

### BRIEF DESCRIPTION OF DRAWINGS

FIG. 1 is a view illustrating a configuration of an information providing system for moving body according to a first exemplary embodiment.
FIG. 2 is a block diagram illustrating a configuration of a fixed ground content providing apparatus according to the first exemplary embodiment.
FIG. 3 is a block diagram illustrating a configuration of a moving body content providing apparatus according to the first exemplary embodiment.
FIG. 4 is a view illustrating a registration screen of advertising content according to the first exemplary embodiment.
FIG. 5 is a view illustrating an advertising content database according to the first exemplary embodiment.
FIG. 6 is a view illustrating route data of a moving body registration screen according to the first exemplary embodiment.
FIG. 7 is a view illustrating registration screen of advertising frames for a moving body according to the first exemplary embodiment.
FIG. 8A is a view illustrating an operation information/moving body information database according to the first exemplary embodiment.
FIG. 8B is a view illustrating an operation information/moving body information database according to the first exemplary embodiment.
FIG. 9A is a view illustrating a passenger attribute/history database according to the first exemplary embodiment.
FIG. 9B is a view illustrating a passenger attribute/history database according to the first exemplary embodiment.
FIG. 10 is a flowchart of selecting content for a moving body according to the first exemplary embodiment.
FIG. 11 is a view illustrating a seat information database according to the first exemplary embodiment.
FIG. 12 is a view illustrating a moving body advertising content database according to the first exemplary embodiment.
FIG. 13 is a view illustrating a passenger attribute/history/seat information database according to the first exemplary embodiment.
FIG. 14 is a flowchart of selecting content for a moving body terminal according to the first exemplary embodiment.
FIG. 15 is a view illustrating a moving body terminal advertising content database according to the first exemplary embodiment.
FIG. 16 is a block diagram illustrating a configuration of a moving body terminal according to the first exemplary embodiment.
FIG. 17 is a view illustrating an advertising result database according to the first exemplary embodiment.
FIG. 18 is a view illustrating an advertising result database according to the first exemplary embodiment.
FIG. 19 is a view illustrating an advertising result database according to the first exemplary embodiment.
FIG. 20 is a view illustrating a configuration of an information providing system for moving body according to a second exemplary embodiment.
FIG. 21 is a block diagram illustrating a configuration of a moving body terminal according to a third exemplary embodiment.

### DESCRIPTION OF EMBODIMENTS

Exemplary embodiments will be described in detail below optionally with reference to the drawings. However, the exemplary embodiments will not be described in detail more than necessary in some cases. For example, in some cases, matters which have already been well known will not be described in detail, and substantially the same components will not be described again. This is to prevent the following description from being redundant more than necessary, and help one of ordinary skill in the art easily understand the following description.

In addition, the applicant provides the accompanying drawings and the following description to make it easy for one of ordinary skill in the art to sufficiently understand the present disclosure, and does not intend to limit the subject matters recited in the claims.

### FIRST EXEMPLARY EMBODIMENT

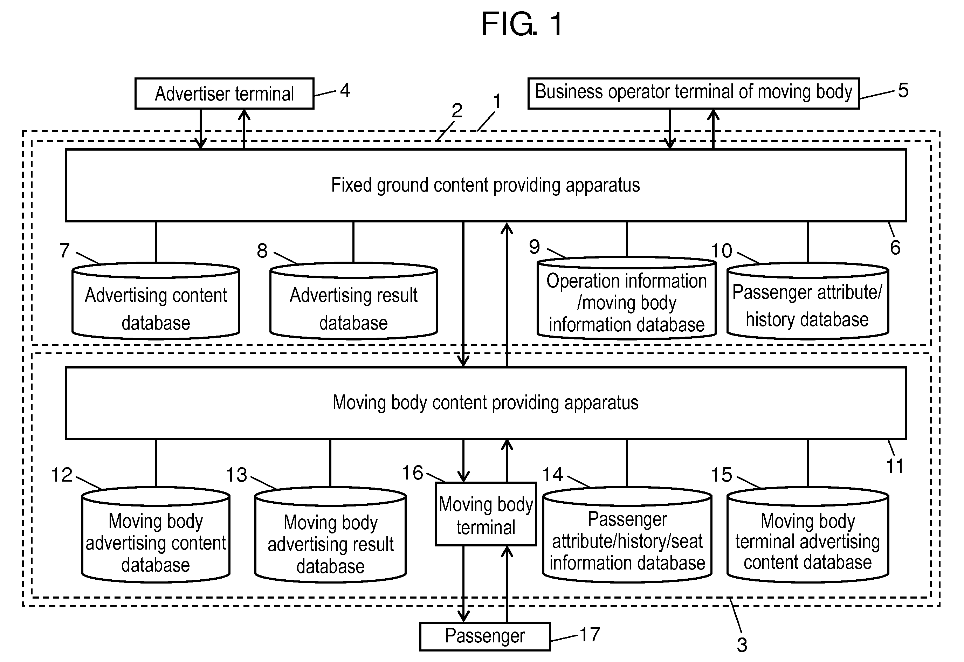

The first exemplary embodiment will be described below with reference to FIGS. 1 to 18.

### [1-1. Configuration]

FIG. 1 is a view illustrating a configuration of information providing system for moving body 1 according to the first exemplary embodiment. As illustrated in FIG. 1, an advertiser, a business operator of moving body and a passenger access this information providing system.

Information providing system for moving body 1 includes fixed ground system 2 which is installed on the ground, and moving body system 3. Fixed ground system 2 and moving body system 3 exchange data with each data providing unit and data acquisition unit.

An advertising content interface and a seat information interface are provided between fixed ground system 2 and moving body system 3. The advertising content interface provides advertising content information for a predetermined moving body generated by fixed ground system 2, to the moving body. The seat information interface provides seat information for a predetermined moving body registered by the business operator of moving body,

Further, an advertising results counting interface is provided. The advertising results counting interface provides result information related to advertisement provided by moving body system 3 together with an identifier of the moving body, to fixed ground system 2.

Fixed ground system 2 is connected with at least one service provider through a network, and includes a service information acquisition interface which receives service information.

The present exemplary embodiment will be described providing advertisement as a service. The service provider includes an advertiser and a business operator of moving body which displays advertisement in advertising frames.

The advertiser owns advertiser terminal 4, and inputs information of advertisement service provided to passengers of the moving body through advertiser terminal 4.

The business operator of moving body owns business operator terminal of moving body 5, and inputs moving body information through business operator terminal of moving body 5.

Fixed ground system 2 includes fixed ground content providing apparatus 6. Fixed ground content providing apparatus 6 is connected with advertiser terminal 4 and business operator terminal of moving body 5 through the network and exchanges data respectively. And fixed ground content providing apparatus 6 is connected with moving body system 3 and exchanges data and performs predetermined processing. Fixed ground system 2 includes various databases such as advertising content database 7, advertising result database 8, operation information/moving body information database 9, and passenger attribute/history database 10.

Moving body system 3 includes moving body content providing apparatus 11. Moving body content providing apparatus 11 is connected with fixed ground system 2 and moving body terminal 16 and exchanges data respectively. And moving body content providing apparatus 11 performs predetermined processing. Moving body system 3 includes various databases such as moving body advertising content database 12, moving body advertising result database 13, passenger attribute/history/seat information database 14 and moving body terminal advertising content database 15. Moving body system 3 is mounted in a moving body, and one fixed ground system 2 is connected with a plurality of moving body systems 3 and exchanges data respectively.

Moving body terminal 16 displays a variety of information acquired from moving body content providing apparatus 11 to passenger 17, and provides operating information of passenger 17 who operates with respect to moving body terminal 16, to moving body content providing apparatus 11.

### [1-1-2. Configuration of Fixed Ground Content Providing Apparatus]

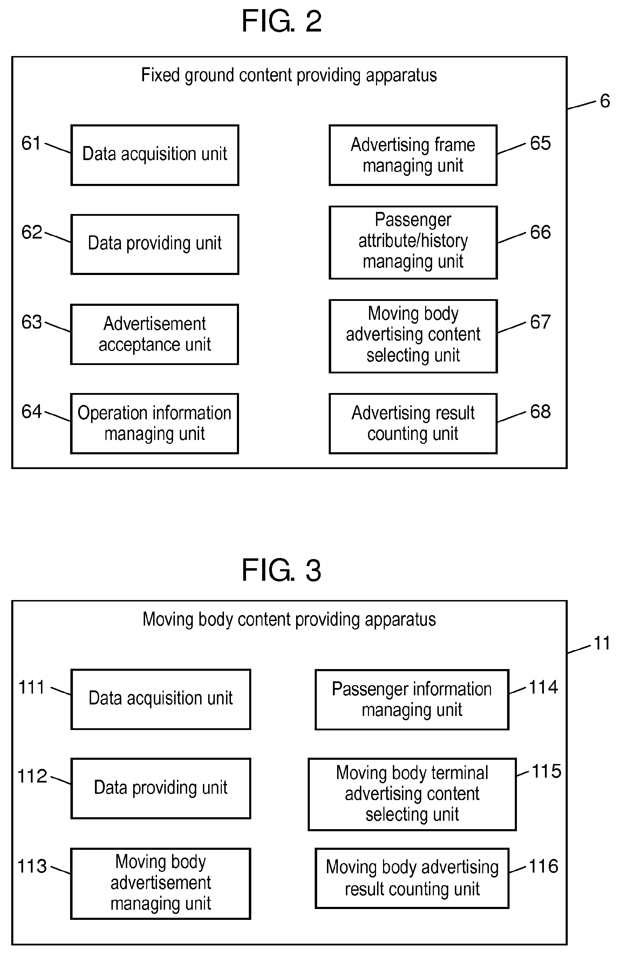

FIG. 2 is a block diagram illustrating a configuration of fixed gourmand content providing apparatus 6 according to the first exemplary embodiment.

Fixed ground content providing apparatus 6 includes data acquisition unit 61, data providing unit 62, advertisement acceptance unit 63, advertising result counting unit 68, operation information managing unit 64, advertising frame managing unit 65, passenger attribute/history managing unit 66 and moving body advertising content selecting unit 67. Data acquisition unit 61 acquires data from advertiser terminal 4, business operator terminal of moving body 5 and moving body system 3. Data providing unit 62 provides data to advertiser terminal 4, business operator terminal of moving body 5 and moving body system 3. Advertisement acceptance unit 63 accepts advertisement registered by advertiser terminal 4 and registers the advertisement in advertising content database 7. Advertising result counting unit 68 counts a plurality of moving body advertising result data acquired from a plurality of moving body systems 3 and stores the moving body advertising result data in advertising result database 8. Operation information managing unit 64 accepts operation information registered by business operator terminal of moving body 5 and stores the operation information in operation information/moving body information database 9. Advertising frame managing unit 65 accepts airframe information and advertising frame information corresponding to the airframe, registered by business operator terminal of moving body 5, and stores the airframe information and the advertising frame information in operation information/moving body information database 9. Passenger attribute/history managing unit 66 accepts attribute information of passengers registered by business operator terminal of moving body 5 and history information of passengers provided by moving body system 3, and stores the attribute information of the passengers and the history information of the passengers in passenger attribute/history database 10. Moving body advertising content selecting unit 67 acquires information from advertising content database 7, operation information/moving body information database 9 and passenger attribute/history database 10, and selects advertising content for moving body 3.

### [1-1-3. Configuration of Moving Body Content Providing Apparatus]

FIG. 3 is a block diagram illustrating a configuration of moving body content providing apparatus 11 according to the first exemplary embodiment.

Moving body content providing apparatus 11 includes data acquisition unit 111, data providing unit 112, moving body advertisement managing unit 113, passenger information managing unit 114, moving body terminal advertising content selecting unit 115 and moving body advertising result counting unit 116. Data acquisition unit 111 acquires data from fixed ground system 2 and moving body terminal 16. Data providing unit 112 provides data to fixed ground system 2 and moving body terminal 16. Moving body advertisement managing unit 113 stores advertising content acquired from fixed ground system 2, in moving body advertising content database 12. Passenger information managing unit 114 stores passenger attribute/history data and seat information data acquired from fixed ground system 2 in passenger attribute/history/seat information database 14. Moving body terminal advertising content selecting unit 115 selects advertising content for each moving body terminal 16, from the moving body advertising content data, the passenger attribute/history data and the seat information data. Moving body advertising result counting unit 116 counts advertising result data for each moving body terminal 16 and stores the advertising result data in moving body advertising result database 13.

### [1-2. Operation]

An operation of information providing system for moving body 1 configured as above will be described below. Information providing system for moving body 1 performs each of operations that registration of advertisement by an advertiser, registration of moving body information and operation information by a business operator of moving body, registration of passenger attribute information by a business operator of moving body, selection of advertising content by fixed ground system 2, registration of seat information by a business operator of moving body, providing information from fixed ground system 2 to moving body system, selection of content for a moving body terminal by moving body system, collection of advertising results by moving body system and providing advertising results to fixed ground system 2, and collection of advertising results by fixed ground system 2 and providing advertising results to a business operator of moving body. Each of the operations will be described below.

### [1-2-1. Registration of advertisement by an advertiser]

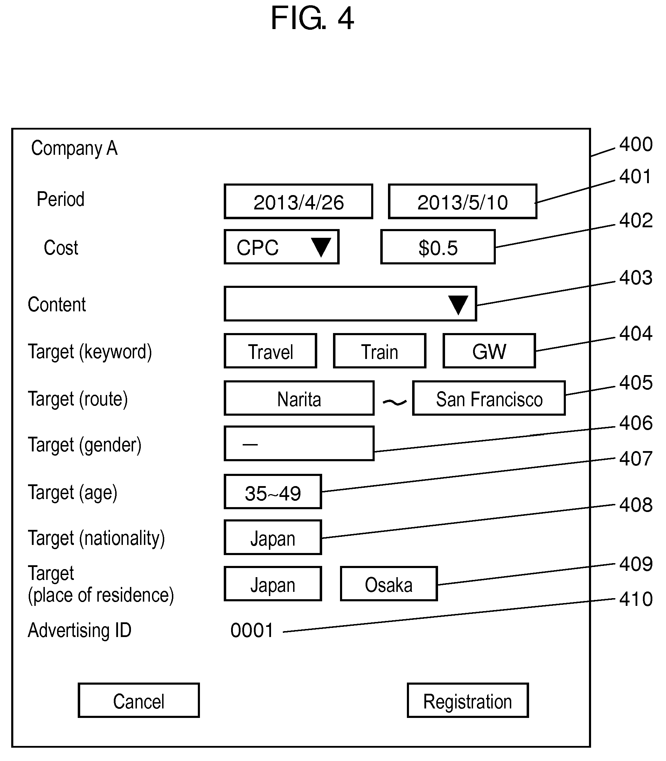

The advertiser registers information for advertisement of the moving body using advertiser terminal 4. More specifically, the advertiser registers data through user interface 400 illustrated in FIG. 4. As data, there are advertising period 401, price (e.g., price per number of displayed times, price per number of access times of advertisement by a passenger and a total upper limit of advertising cost) 402, advertising content (e.g., image information related to advertisement) 403, keyword 404 related to advertisement, route 405 to display advertisement and attribute of a passenger to display advertisement, for example, gender 406, age 407, nationality 408 and place of residence 409.

Advertisement acceptance unit 63 of fixed ground content providing apparatus 6 registers the registered information in advertising content database 7.

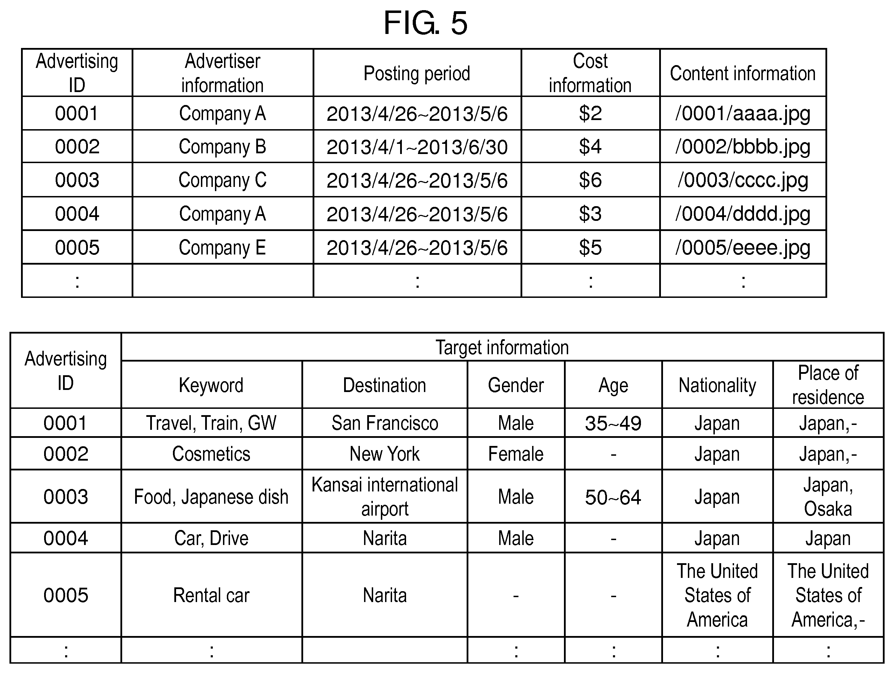

FIG. 5 illustrates an example of data registered in advertising content database 7. Advertisement acceptance unit 63 assigns the registered data a unique advertising ID. The advertiser can check advertising ID 410 on the user interface illustrated in FIG. 4.

### [1-2-2. Registration of moving body information and operation Information by a business operator of moving body]

The business operator of moving body registers operation information of the moving body and moving body information using business operator terminal of moving body 5.

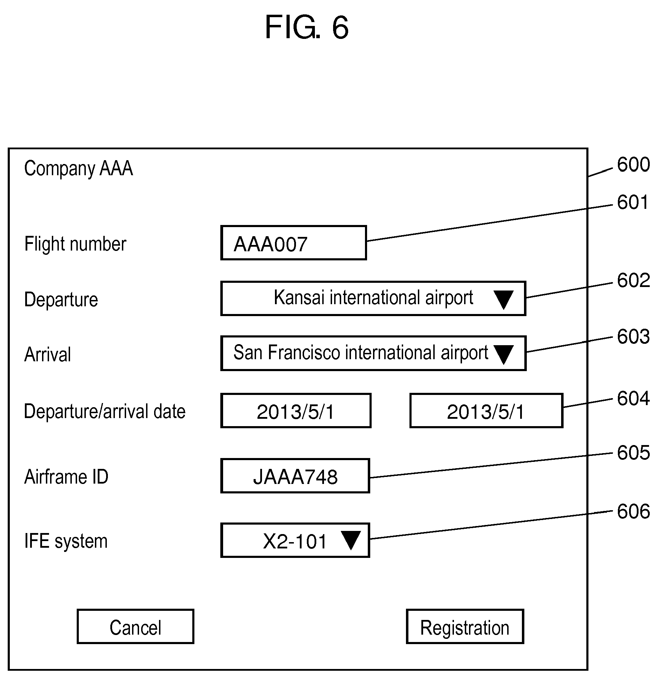

The business operator of moving body registers operation information of the moving body such as flight number 601, departure place 602, arrival place 603, departure/arrival date 604, airframe ID 605 and IFE (In Flight Entertainment) system type 606 through user interface 600 illustrated in FIG. 6.

Operation information managing unit 64 of fixed content providing apparatus 6 resisters the registered operation information in operation information/moving body information database 9.

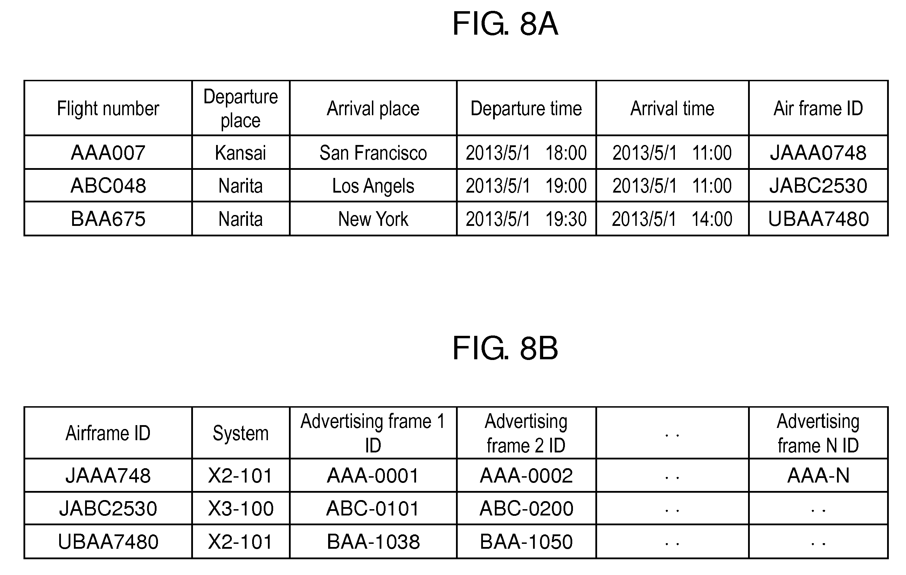

FIG. 8A illustrates an example of operation information registered in operation information/moving body information database 9.

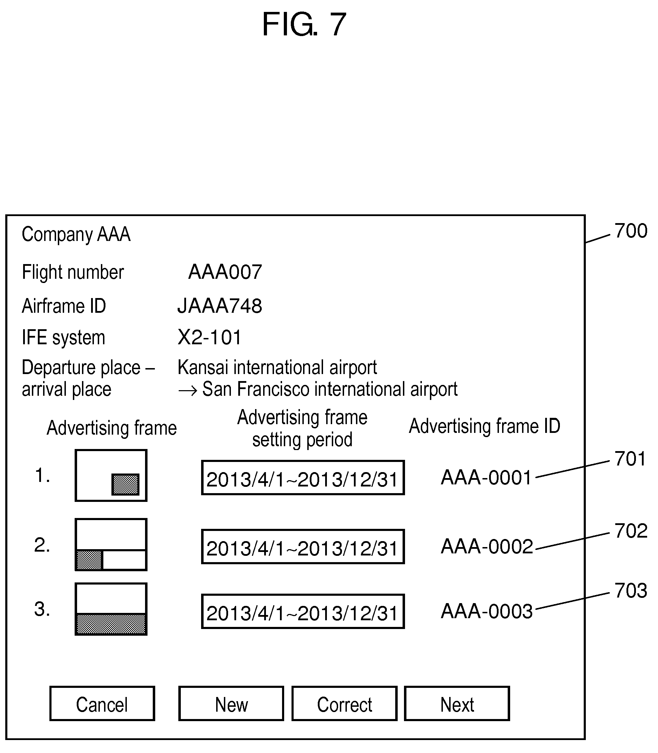

The business operator of moving body registers advertising frame information (display screen information and setting period) through user interface 700 illustrated in FIG. 7. Advertising frame information is a frame set on a screen of moving body terminal 16 installed in a predetermined airframe.

Advertising frame managing unit 65 of fixed content providing apparatus 6 registers the registered advertising frame information in operation information/moving body information database 9.

FIG. 8B illustrates an example of data registered in operation information/moving body information database 9. Advertising frame managing unit 65 assigns the registered advertising frame a unique advertising frame ID. The business operator of moving body can check advertising frame IDs 701 to 703 on the user interface illustrated in FIG. 7.

### [1-2-3. Registration of passenger attribute information by a business operator of moving body]

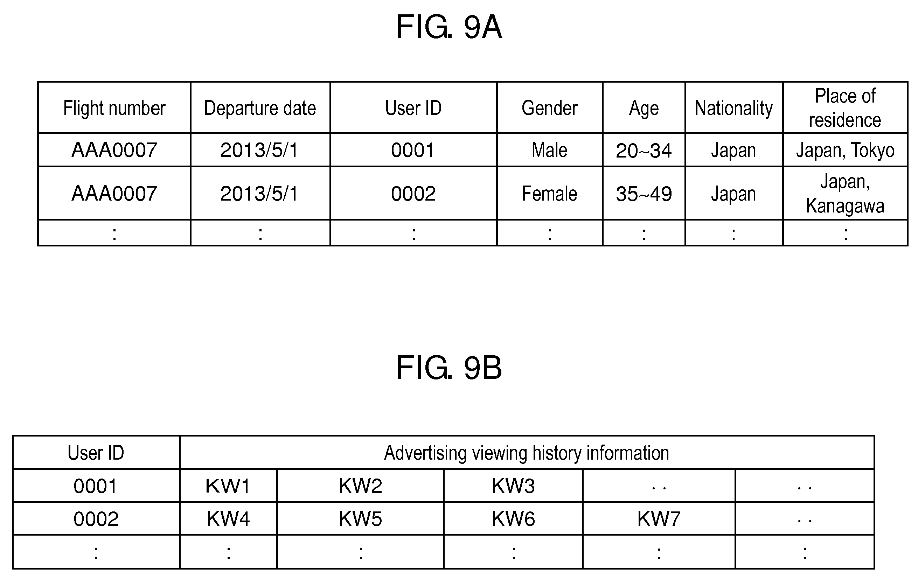

Further, the business operator of moving body registers attribute information of a passenger, who uses a predetermined moving body, through business operator terminal of moving body 5. The attribute information includes user ID to identify a passenger in the moving body, gender, age, nationality, place of residence and the like. Passenger attribute/history managing unit 66 resisters the registered attribute information in passenger attribute/history database 10. FIGS. 9A and 9B illustrate an example of data registered in passenger attribute/history database 10. In passenger attribute/history database 10, flight information (a flight number, a departure date and a destination place) which has been previously used or will be used in future, attributes such as gender, age, nationality and place of residence and the like, advertising information (advertising viewing history information) which has been previously selected by a passenger and the like are registered.

### [1-2-4. Selection of advertising content by fixed ground system]

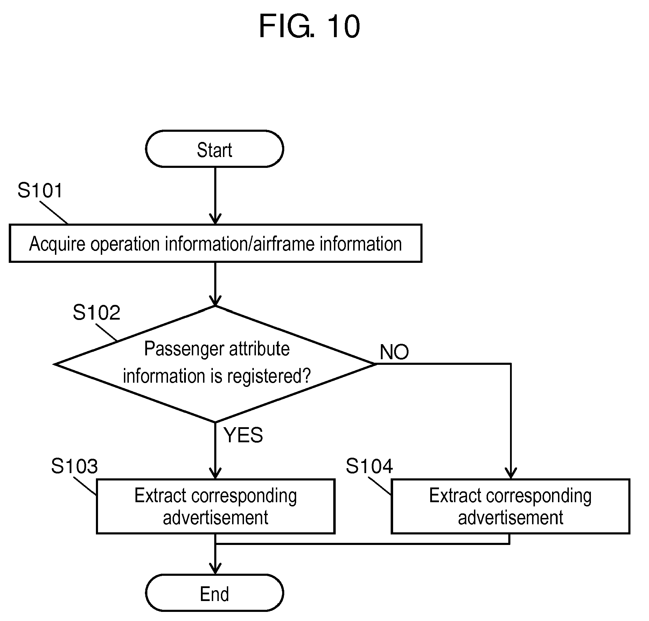

Moving body advertising content selecting unit 67 of fixed content providing apparatus 6 in fixed ground system 2 selects advertising content for each moving body. FIG. 10 is a flowchart illustrating an operation that moving body advertising content selecting unit 67 selects advertising content for each moving body.

At first, Moving body advertising content selecting unit 67 acquires operation information of a predetermined moving body from operation information/moving body information database 9 (S101).

Next, moving body advertising content selecting unit 67 checks whether or not passenger attribute/history information of a passenger using the predetermined moving body is registered in the passenger attribute/history database, based on the acquired operation information (S102). When the passenger attribute/history information is registered (YES in S102), moving body advertising content selecting unit 67 extracts advertisement which corresponds with each item of target information and a posting period, illustrated in FIG. 5, using the operation information and the passenger attribute information (S103). When the passenger attribute/history information is not registered (NO in S102), moving body advertising content selecting unit 67 extracts advertisement which corresponds to a destination place of the target information and a posting period, illustrated in FIG. 5, using only the operation information (S104).

### [1-2-5. Registration of seat information by a business operator of moving body]

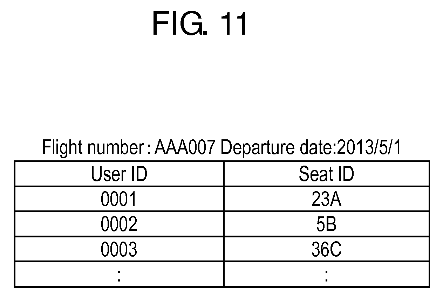

Seat information of passengers determines by the passenger's request or adjustment of a weight balance of the moving body, and then the business operator of moving body registers seat information of the passengers in fixed content providing apparatus 6 through business operator terminal of moving body 5. The seat information includes information(a fright number and a departure date) indicating the predetermined moving body, a user ID identifying a passenger, a seat ID indicating a seat position in the moving body and the like. FIG. 11 illustrates an example of registered seat information of passengers.

### [1-2-6. Providing information from fixed ground system to moving body system]

Data providing unit of fixed content providing apparatus 6 provides the extracted advertising content information, passenger attribute/history information of the predetermined moving body and registered seat information to moving body system 3.

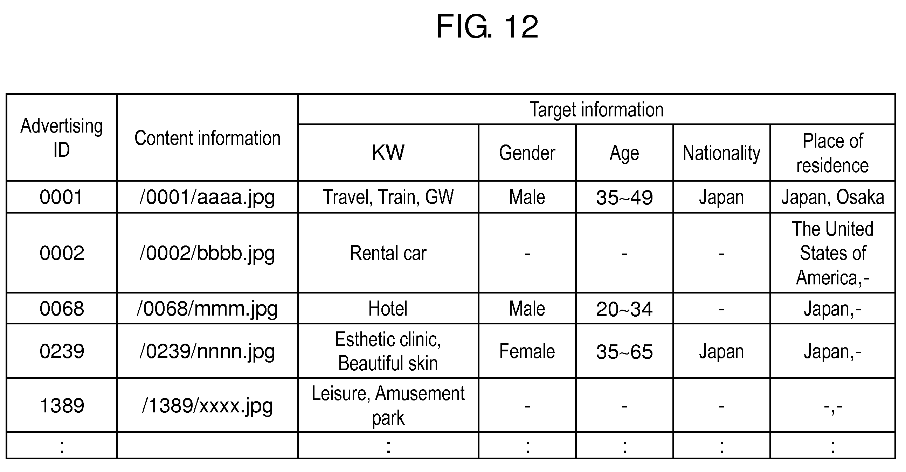

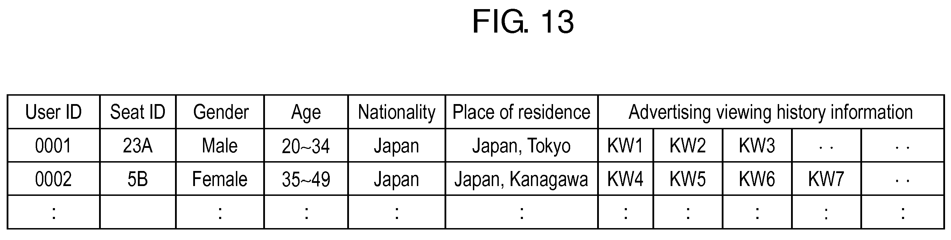

Data acquisition unit 111 of moving body content providing apparatus 11 in moving body system 3 acquires these pieces of information. Moving body advertisement managing unit 113 registers the acquired advertising information in moving body advertising content database 12. FIG. 12 illustrates an example of data registered in the moving body advertising content database. Passenger information managing unit 114 registers the passenger attribute/history information and the seat information in passenger attribute/history/seat information database 14. FIG. 13 illustrates an example of data registered in passenger attribute/history/seat information database 14.

### [1-2-7. Selection of content for a moving body terminal by moving body system]

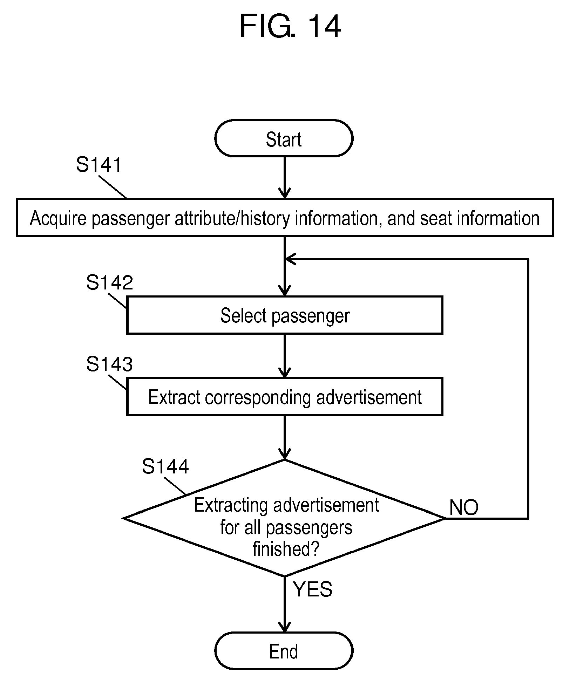

Next, moving body terminal advertising content selecting unit 115 of moving body content providing apparatus 11 in moving body system 3 selects advertising content for each moving body terminal 16. FIG. 14 is a flowchart illustrating an operation that moving body terminal advertising content selecting unit 115 selects advertising content for moving body terminal 16.

At first, moving body terminal advertising content selecting unit 115 acquires passenger information from passenger attribute/history/seat information database 14 (S141).

Next, moving body terminal advertising content selecting unit 115 selects a specific passenger (seat ID) based on the acquired passenger information (S142), and extracts advertisement which corresponds with target information illustrated in FIG. 12 based on the selected passenger attribute/history information (S143). This operation executes for all passengers.

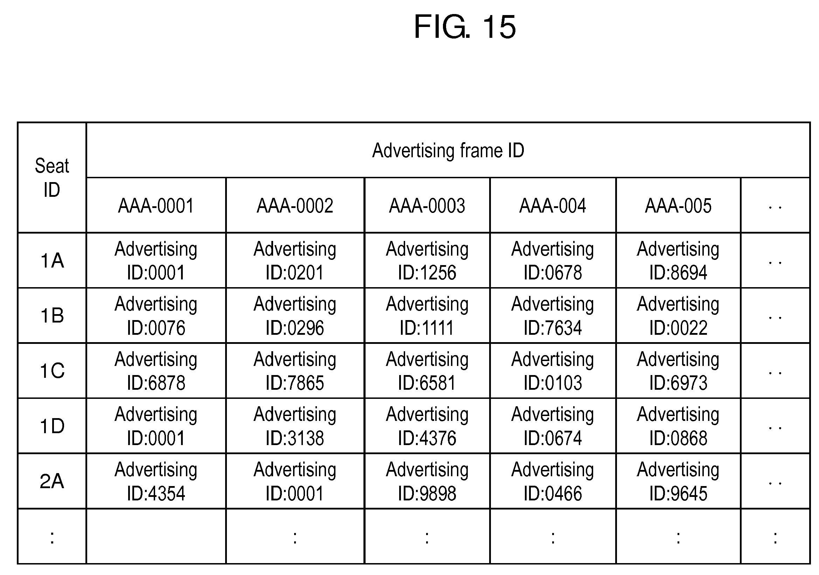

The extracted advertisement for all passengers are registered in moving body terminal advertising content database 15. FIG. 15 illustrates an example of data registered in moving body terminal advertising content database 15. A plurality of advertising content information (advertising ID), which display in advertising frames, registered by the business operator of moving body are registered for each seat.

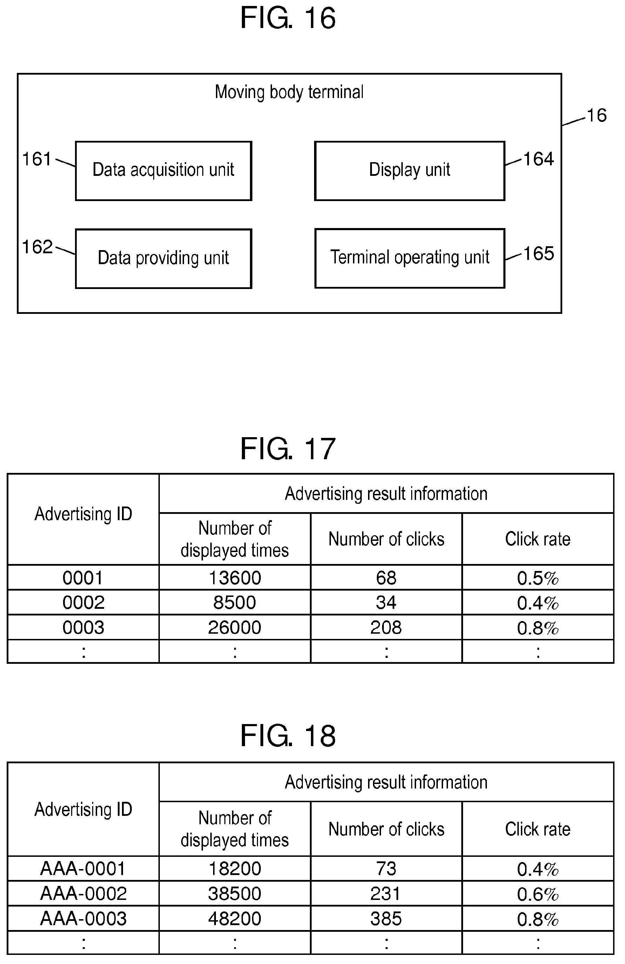

Data acquisition unit 161 of moving body terminal 16, illustrated in FIG. 16, provides the advertisement extracted by the above operation to moving body terminal 16, and display unit 164 provides the advertisement, corresponding to the passenger attribute information and the history information, to passenger 17.

### [1-2-8. Collection of advertising results by moving body system and providing advertising results to fixed ground system]

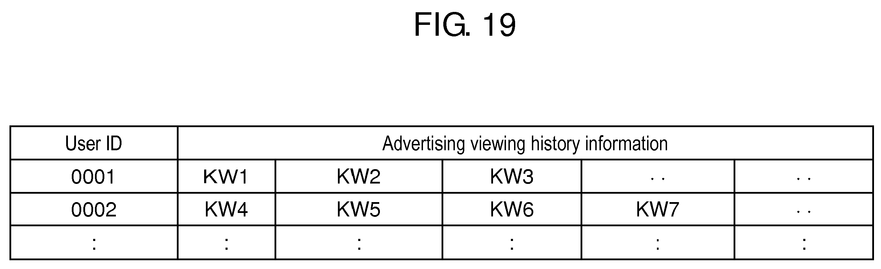

When advertisement is provided to passenger 17, moving body advertisement result counting unit 116 registers the provided advertising ID information, the provided advertising frame ID information and the like in moving body advertising result database 13. Further, when terminal operating unit 165 of moving body terminal 16 selects the provided advertisement by operation of passenger 17, data providing unit 162 notifies moving body content providing apparatus 11 of this selection and moving body content providing apparatus 11 provides the content to moving body terminal 16. Also, moving body advertising result counting unit 116 registers information (the number of clicks) indicating that passenger 17 selects the provided advertising ID information and advertising frame ID information in moving body advertising result database 13. FIGS. 17, 18 and 19 illustrate an example of data registered in moving body advertising result database 13. As illustrated in FIG. 17, the number of times that advertisement has been displayed, the number of times that the advertisement has been selected by passenger 17 (the number of clicks) and the like are stored for each advertisement (advertising ID) registered by an advertiser. Further, as illustrated in FIG. 18, the number of times that advertisement has been displayed in an advertising frame, the number of times that the advertisement has been selected by passenger 17 (the number of clicks) and the like are stored for each advertisement frame (advertising frame ID) registered by the business operator of moving body. Furthermore, as illustrated in FIG. 19, types of advertisement selected by passenger 17 are stored. The present exemplary embodiment uses keyword 404, set by the advertiser at the time of advertisement registration, as a type of advertisement.

When moving body system 3 becomes communicable with fixed ground system 2, moving body advertising result counting unit 116 controls data providing unit 112 that provides information for identifying a moving body and data of moving body advertising result database 13 to fixed ground system 2. Data acquisition unit 61 of fixed ground system 2 acquires the information for identifying the moving body and the advertising result data. Advertising result counting unit 68 registers the acquired data in advertising result database 8. Passenger attribute/history managing unit 66 extracts a history of selecting advertisement for each passenger 17 from the acquired moving body advertising result data, and registers the history in passenger attribute/history database 10.

### [1-2-9. Collection of advertising results by fixed ground system and providing Advertising results to a business operator of moving body]

When receiving a request of advertising result specified advertising ID from advertiser terminal 4, data providing unit 62 of fixed content providing apparatus 6 acquires advertising result information from advertising result database 8, and provides the advertising result information to advertiser terminal 4. Consequently, the advertiser can acquire the number of times that the registered advertisement has been displayed in the moving body, the number of times that passengers have selected the registered advertisement (the number of clicks) and advertising cost.

Further, when receiving a request of advertising result specified advertising frame ID from business operator terminal of moving body 5, data providing unit 62 of fixed content providing apparatus 6 acquires result information from advertising result database 8, and provides the advertising result information to business operator terminal of moving body 5. Consequently, the business operator of moving body can acquire the number of times that a registered advertising frame has been displayed in the moving body, the number of times that passengers have selected the registered advertising frame (the number of clicks) and an advertising fee which the specified advertising frame has earned.

### [1-3. Conclusion]

As described above, in the present exemplary embodiment, Information providing system for moving body 1 includes fixed ground system 2 and moving body system 3. Fixed ground system 2 includes a service information acquisition unit which receives a plurality of service information from at least one service provider, a result information providing unit which provides the service provider with results of a service provided the moving body system, and a moving body information acquisition unit which acquires route information of the moving body, attribute information of a passenger using the moving body and seat information of the moving body, from a business operator of moving body. Further, fixed ground system 2 includes an information providing unit which selects a service from the service information, based on the route information and the attribute information, and provides the selected service and the seat information to the moving body system 3, and a service result information acquisition unit which acquires results of the service provided moving body system 3, from moving body system 3. Furthermore, moving body system 3 includes an information acquisition unit which acquires the selected service and the seat information, output from the information providing unit of fixed ground system 2, a service information providing unit which selects service for a moving body terminal disposed at a seat corresponding to the selected service and the seat information, and provides the service to moving body terminal 16, and a service result providing unit which provides fixed ground system 2 with results of the selected service.

Consequently, the present disclosure can provides a system which provides appropriate information for each passenger, even in a case where an arrival destination is the same for passengers, when a seat of the passenger is different from a reserved seat such as the seat of an airplane.

### SECOND EXEMPLARY EMBODIMENT

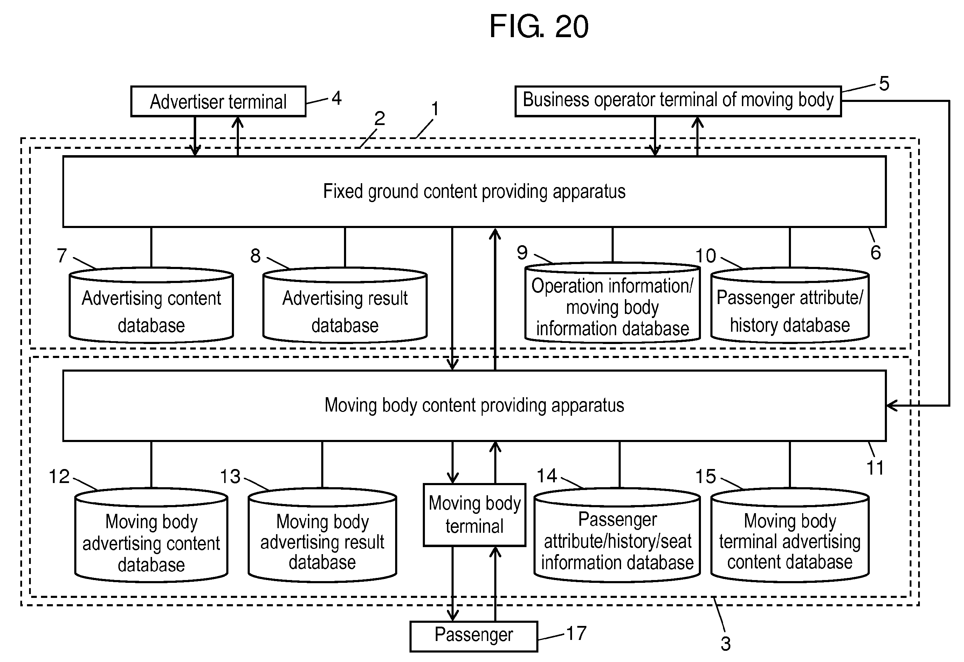

The second exemplary embodiment will be described below with reference to FIG. 20.

The deference of the second exemplary embodiment and the first exemplary embodiment is a route in which seat information of passenger 17 is provided from business operator terminal of moving body 5 to moving body system 3.

According to the first exemplary embodiment, the seat information of passenger 17 is provided to moving body system 3 from business operator terminal of moving body 5 through fixed ground system 2. Meanwhile, according to the second exemplary embodiment, the seat information of passenger 17 is directly provided from business operator terminal of moving body 5 to moving body system 3. The seat information is provided from business operator terminal of moving body 5 to moving body system 3 through a network.

Seat information is provided from business operator terminal of moving body 5 to moving body system 3 through the network in the present exemplary embodiment. However, seat information may be provided using other connection method. For example, seat information may be provided by directly connecting portable business operator terminal of moving body 5 to moving body system 3 or may be provided from business operator terminal of moving body 5 to moving body system 3 through a portable recording medium such as an SD (Secure Digital) card.

As described above, in the present exemplary embodiment, information providing system for moving body 1 includes fixed ground system 2 and moving body system 3. Fixed ground system 2 includes a service information acquisition unit which receives a plurality of service information from at least one service provider, and a result information providing unit which provides the service provider with results of a service provided in the moving body. Further, fixed ground system 2 includes a moving body information acquisition unit which acquires route information of the moving body and attribute information of a passenger using the moving body, from a business operator of moving body, a service information providing unit which selects a service from the service information, based on the route information and the attribute information, and provides the selected service to moving body system 3, and a service result information acquisition unit which acquires results of the service provided moving body system 3, from moving body system 3. Furthermore, moving body system 3 includes a service information acquisition unit which acquires the selected service output from the information providing unit of the fixed ground system 2, a seat information acquisition unit which acquires seat information of a (corresponding) moving body from the business operator of moving body, a service information providing unit which selects service for moving body terminal 16 disposed at a seat corresponding to the selected service and the seat information, and provides the service to moving body terminal 16, and a service result providing unit which provides fixed ground system 2 with results of the selected service.

Consequently, the present disclosure can provides a system which provides appropriate information for each passenger, even in a case where an arrival destination is the same for passengers, when a seat of the passenger is different from a reserved seat such as the seat of an airplane.

### THIRD EXEMPLARY EMBODIMENT

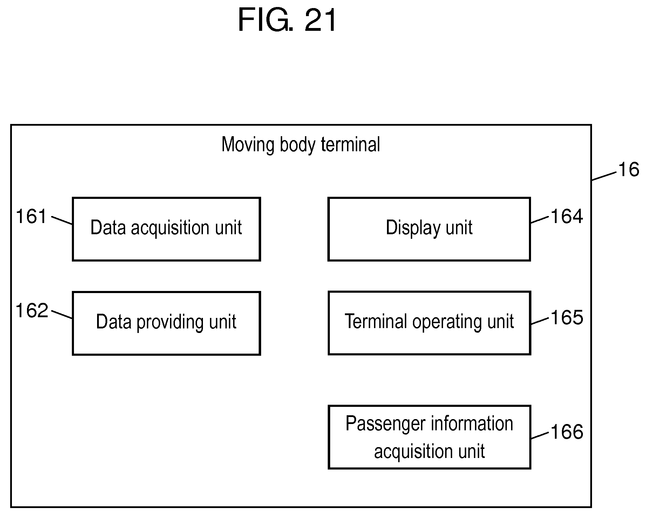

The third exemplary embodiment will be described below with reference to FIG. 21.

The deference of the third exemplary embodiment and the first exemplary embodiment is a route in which seat information of passenger 17 is provided to moving body system 3.

According to the first exemplary embodiment, the seat information of passenger 17 is provided to moving body system 3 from business operator terminal of moving body 5 through fixed ground system 2. Meanwhile, in the third exemplary embodiment, the seat information of passenger 17 is provided through passenger information acquisition unit 166 of moving body terminal 16 illustrated in FIG. 20. Passenger 17 touches a mileage card which is provided from a business operator of moving body and in which a user ID which is identification information of the passenger is recorded, on moving body terminal 16 disposed at a seat of the passenger. Passenger information acquisition unit 166 of moving body terminal 16 acquires the user ID information from the mileage card touched moving body terminal 16 using near field communication Data providing unit 162 provides the acquired user ID information to moving body content providing apparatus 11. The user ID provided to moving body content providing apparatus 11 is registered together with a seat ID for identifying each moving body terminal 16 in passenger attribute/history/seat information database 14.

User ID information acquires using a mileage card which a passenger owns in the present exemplary embodiment. However, user ID information may acquire using other acquisition method. For example, user ID information may acquires by reading user ID information printed on a boarding pass or user ID information displayed by a smartphone application provided by a business operator of moving body.

As described above, in the present exemplary embodiment, information providing system for moving body 1 includes fixed ground system 2 and moving body system 3. Fixed ground system 2 includes a service information acquisition unit which receives a plurality of service information from at least one service provider, and a result information providing unit which provides the service provider with results of a service provided the moving body system. Further, fixed ground system 2 includes a moving body information acquisition unit which acquires route information of the moving body and attribute information of a passenger using the moving body, from a business operator of moving body, a service information providing unit which selects a service from the service information, based on the route information and the attribute information, and provides the selected service to moving body system 3, and a service result information acquisition unit which acquires service results of a service provided moving body system 3 from moving body system 3. Furthermore, moving body system 3 includes a service information acquisition unit which acquires the selected service output from the information providing unit of the fixed ground system, a passenger information acquisition unit which acquires passenger information from moving body terminal 16 disposed at a seat in the moving body, a service information providing unit which selects service for moving body terminal 16 disposed at a seat corresponding to the selected service and the passenger information, and provides the service to moving body terminal 16, and a service result providing unit which provides fixed ground system 2 with results of the selected service.

Consequently, the present disclosure can provides a system which provides appropriate information for each passenger, even in a case where an arrival destination is the same for passengers, when a seat of the passenger is different from a reserved seat such as the seat of an airplane.

As described above, the accompanying drawings and the detailed description of the invention have been provided for the exemplary embodiments and another exemplary embodiment which the applicant thinks the best mode. These accompanying drawings and the detailed description of the invention are provided to exemplify the subject matters recited in the claims for one of ordinary skill in the art with reference to a particular exemplary embodiment. Accordingly, the components described in the accompanying drawings and the detailed descriptions of the invention include not only components which are required to solve the problem but also other components. Therefore, it should not be immediately understood that those components which are not required are necessary simply because these components which are not required are described in the accompanying drawings and the detailed description of the invention. Further, the above exemplary embodiments can be variously changed, replaced, added and omitted in the range of the claims or the range equivalent to the claims.

### INDUSTRIAL APPLICABILITY

The present disclosure is applicable to an information providing system for moving body which provides information to passengers of a moving body which has a departure place and a destination place. More specifically, the present disclosure is applicable to the information providing system for moving body in which a seat of the passenger is different from a reserved seat such as an airplane.

### REFERENCE MARKS IN THE DRAWINGS

- 1: information providing system for moving body
- 2: fixed ground system
- 3: moving body system
- 4: advertiser terminal
- 5: business operator terminal of moving body
- 6: fixed ground content providing apparatus
- 7: advertising content database
- 8: advertising result database
- 9: operation information/moving body information database
- 10: passenger attribute/history database
- 11: moving body content providing apparatus
- 12: moving body advertising content database
- 13: moving body advertising result database
- 14: passenger attribute/history/seat information database
- 15: moving body terminal advertising content database
- 16: moving body terminal
- 17: passenger

## Claims

1. An information providing system for moving body comprising:
a fixed ground system; and a moving body system installed in a moving body, the fixed ground system and the moving body system being connected through a network,
wherein the fixed ground system includes
a service information acquisition unit which receives a plurality of service information from a service provider,
a result information providing unit which provides the service provider with results of a service provided the moving body system,
a moving body information acquisition unit which acquires route information of the moving body, attribute information of a passenger using the moving body and seat information of the moving body, from a business operator of moving body,
an information providing unit which selects a service from the service information, based on the route information and the attribute information, and provides the selected service and the seat information to the moving body system, and
a service result information acquisition unit which acquires results of the service provided the moving body system, from the moving body system, and
the moving body system includes
an information acquisition unit which acquires the selected service and the seat information, output from the information providing unit of the fixed ground system,
a service information providing unit which provides the selected service for a moving body terminal disposed at a seat corresponding to the seat information, and
a service result information providing unit which provides the fixed ground system with results of the selected service.

2. The information providing system for moving body according to claim 1,
wherein the results of a service includes a number of times displaying the service in the moving body or a number of times selecting the service by the passenger.

3. The information providing system for moving body according to claim 1,
wherein the attribute information includes advertising viewing history information which indicates advertisement selected by the passenger in the past.

4. An information providing method of information providing system for moving body, the method comprising:
acquiring operation information for a predetermined moving body from an operation information/moving body information database in which operation information of a moving body and information related to the moving body are stored;
checking whether or not attribute information of a passenger using the predetermined moving body and history information of the passenger are registered in a passenger attribute/history database in which a plurality of attribute information of passengers and a plurality of history information of passengers are stored, based on the acquired operation information; and
extracting a service based on the operation information and the attribute information when the attribute information and the history information are registered, and extracting a service based on only the operation information when the attribute information and the history information are not registered.

5. An information providing method of information providing system for moving body terminal, the method comprising:
acquiring passenger information and seat information, of a predetermined passenger, from a passenger attribute/history database in which a plurality of passenger information and a plurality of history information are stored, and a seat information database;
selecting a seat ID of the predetermined passenger from the acquired passenger information and the acquired seat information; and
extracting a service based on the seat ID and history information of the passenger,
wherein the method is executed for all passengers of the moving body.

6. An information providing system for moving body comprising:
a fixed ground system; and a moving body system installed in a moving body, the fixed ground system and the moving body system being connected through a network,
wherein the fixed ground system includes
a service information acquisition unit which receives a plurality of service information from a service provider,
a result information providing unit which provides the service provider with results of a service provided the moving body system,
a moving body information acquisition unit which acquires route information of the moving body and attribute information of a passenger using the moving body, from a business operator of moving body,
a service information providing unit which selects a service from the service information, based on the route information and the attribute information, and provides the selected service to the moving body system, and
a service result information acquisition unit which acquires results of the service provided the moving body system, from the moving body system, and
the moving body system includes
a service information acquisition unit which acquires the selected service output from the information providing unit of the fixed ground system,
a seat information acquisition unit which acquires seat information of a predetermined moving body from the business operator of moving body,
a service information providing unit which provides the selected service for a moving body terminal disposed at a seat corresponding to the seat information, and
a service result information providing unit which provides the fixed ground system with results of the selected service.

7. An information providing system for moving body comprising:
a fixed ground system; and a moving body system installed in a moving body, the fixed ground system and the moving body system being connected through a network,
wherein the fixed ground system includes
a service information acquisition unit which receives a plurality of service information from a service provider,
a result information providing unit which provides the service provider with results of a service provided the moving body system,
a moving body information acquisition unit which acquires route information of the moving body and attribute information of a passenger using the moving body, from a business operator of moving body,
a service information providing unit which selects a service from the service information, based on the route information and the attribute information, and provides the selected service to the moving body system, and
a service result information acquisition unit which acquires results of a service provided the moving body system, from the moving body system, and
the moving body system includes
a service information acquisition unit which acquires the selected service output from the information providing unit of the fixed ground system,
a passenger information acquisition unit which acquires passenger information from a moving body terminal disposed at a seat in the moving body,
a service information providing unit which provides the selected service for a moving body terminal disposed at a seat corresponding to the passenger information, and
a service result information providing unit which provides the fixed ground system with results of the selected service.
